# EUROPÄISCHE PATENTSCHRIFT

(11) **EP 2 632 191 B1**
(45) Veröffentlichungstag und Bekanntmachung des Hinweises auf die Patenterteilung: **21.02.2018**
(21) Anmeldenummer: 12198867.9
(22) Anmeldetag: 21.12.2012
(51) Int. Cl.: H04W 4/20, H04W 4/18, G06F 3/01, G06F 9/50

(54) **Verfahren zum Ausgeben von Interaktionselementen**
Method for outputting interaction elements
Procédé d'émission d'éléments d'interaction

(30) Priorität: 29.12.2011 DE 102011122491
(43) Veröffentlichungstag der Anmeldung: 28.08.2013
(73) Patentinhaber: Deutsche Telekom AG, 53113 Bonn (DE)
(72) Erfinder: Steinkuhle, Axel, 50733 Köln (DE); Hinze, Henner, 53177 Bonn (DE); Seifert, Caroline, 53227 Bonn (DE)
(74) Vertreter: Braun-Dullaeus, Karl-Ulrich

(56) Entgegenhaltungen:
- EP-A1- 2 226 719
- WO-A1-2011/135352
- US-A1- 2010 229 082

## Beschreibung

Die Erfindung betrifft ein Verfahren zum Ausgeben von Interaktionselementen auf einem internetfähigen elektronischen Endgerät, wobei das Endgerät mit einer Rechnerwolke verbunden ist und eine Nutzeranwendung auf einer zentralen Datenverarbeitungseinheit in der Rechnerwolke abläuft.

Das sogenannte Cloud-Computing gewinnt zunehmend an Bedeutung. Dabei werden für das Betreiben von Nutzeranwendungen IT-Infrastrukturen von entfernt gelegenen Datenverarbeitungseinrichtungen genutzt. Mit einem internetfähigen elektronischen Endgerät, beispielsweise einem Mobiltelefon, kann der Nutzer mit der Nutzeranwendung interagieren. Auf dem Endgerät selbst läuft aber lediglich eine Visualierung der Nutzeranwendung ab. Die Hauptaufgabe des einzelnen Endgeräts besteht folglich darin, lediglich die Benutzerschnittstelle zur Verfügung zu stellen. Die innerhalb der Nutzeranwendung vorgenommenen anwendungsbezogenen Rechenalgorithmen werden auf irgendwelchen entfernten Datenverarbeitungseinrichtungen innerhalb dieser Cloud abgearbeitet.

Der Vorteil dieses Konzepts liegt in der unbegrenzten Kapazität an Datenspeicher und Rechenleistung, die die Cloud dem Nutzer zur Verfügung stellen kann, unabhängig von der jeweiligen Kapazität des einzelnen Endgerätes. Nachteilig daran ist allerdings, dass die Cloud sämtliche Visualisierungsdaten über das Internet an das Endgerät übersendet und damit hohe Datenübertragungskapazitäten verlangt und bindet. Ferner sind die Möglichkeiten begrenzt, das äußere Erscheinungsbild von Nutzeranwendungen im Rahmen des sogenannten Telefon-Brandings an den Netz- oder Diensteanbieter anzupassen. Ferner müssen nutzerspezifische Einstellungen stets an die Cloud übergeben werden, die dann die Nutzeranwendungen entsprechend anpasst, um so Wünsche des Kunden an spezielle äußerliche Erscheinungsformen zu berücksichtigen.

Im Gegensatz dazu offenbart die US 2010/0229082 A1 zwar auch ein Cloud-System; in der Cloud ist aber lediglich ein Server für Kontextdaten vorgesehen, der eine auf einem Mobiltelefon ablaufende Anwendung mit Daten und Graphikelementen versorgt.

Insofern bietet das Cloud-Computing zwar einige Vorteile; das Verschieben von wesentlichen Kompetenzen aus dem Endgerät in die entfernte Rechnerwolke schafft allerdings die genannten Nachteile. Es ist daher Aufgabe der vorliegenden Erfindung ein verbessertes Verfahren zum Ausgeben von Interaktionselementen im Rahmen des Cloud-Computings bereitzustellen, bei dem die oben angesprochenen Nachteile zumindest verringert, insbesondere vermieden werden.

Die der Erfindung zugrundeliegende Aufgabe wird gelöst durch ein Verfahren nach Anspruch 1 sowie eine Datenverarbeitungsanordnung nach Anspruch 9.

Der Kern der Erfindung liegt in der räumlichen bzw. hardwareseitigen Entkopplung zwischen der Durchführung der Nutzeranwendung und der Erzeugung der Interaktionselemente, welche zur Kommunikation zwischen dem Nutzer und der Datenverarbeitungsanordnung dienen. Der Grundgedanke ist dabei derjenige, dass die Nutzeranwendung, die auf irgendeiner Datenverarbeitungseinheit innerhalb der Rechnerwolke abläuft, letztendlich nur eine Aufforderung zum Ausgeben irgendeines geeigneten Interaktionselements abgibt. Diese Aufforderung kann zwar Angaben über den Inhalt und auch über mögliche Zustände des Interaktionselements enthalten; die eigentliche Erscheinungsform des Interaktionselements wird vollständig durch lokal auf dem Endgerät ablaufende Zuordnungsanordnung festgelegt.

Auf dem Endgerät wird insofern auch die letztendlich Entscheidung getroffen werden, von welcher Art das auszugebende Interaktionselement schließlich sein soll. Die Art des Interaktionselement legt fest, durch welchen menschlichen Sinn ein Interaktionselement von einem Nutzer wahrgenommen werden kann. So kann ein Interaktionselement der Art nach ein taktiles, optisches, auditives oder olfaktorisches Element sein. Die Informationen, die zum Aufbauen des Interaktionselements erforderlich sind, sind vollständig auf dem Endgerät abgelegt. Das bedeutet nun: Über das Internet bekommt das Endgerät die Aufforderung von der Cloud, irgendein Interaktionselement mit einem vorgegebenen Inhalt auszugeben. Das Endgerät selbst bzw. die auf dem Endgerät ablaufende Zuordnungsanwendung entscheidet dann, welches Interaktionselement nun tatsächlich ausgegeben wird. Die hierzu notwendigen Aufbauinformationen, wie z.B. Bilddaten (.jpg-Dateien) für ein optisches Interaktionselement oder Tondaten (.wav-Dateien) für eine auditives Interaktionselement, sind auf dem Endgerät selbst abgelegt und werden, anders als die Aufforderung, nicht über das Internet in Echtzeit übermittelt.

Der Vorteil liegt in dem massiven Einsparungspotenzial an Datenübertragungsvolumen, da anstelle der Aufbauinformationen nunmehr lediglich einzelne Datenbefehle gesendet werden, die vom Volumen her nur einen winzigen Bruchteil des Datenvolumens der Aufbauinformationen umfassen. Ferner ergeben sich für Netz- oder Diensteanbieter im Mobilfunkbereich neue Möglichkeiten, die Endgeräte selbst trotz der Verwendung des Cloud-Computings mit einem Branding zu versehen. Ziel ist es also, der Cloud, also strenggenommen der entfernten Datenverarbeitungseinheit innerhalb der Rechnerwolke, zwar die inhaltliche Arbeit zu überlassen, so dass die Datenverarbeitungseinheit mit der dort ablaufenden Nutzeranwendung entscheidet, welche Inhalte wann angezeigt werden sollen; in welcher Erscheinungsform dann allerdings die Kommunikation mit dem Nutzer stattfinden soll, wird lokal nämlich im Endgerät entschieden.

Vorzugsweise läuft auf dem Endgerät lokal die Zuordnungsanwendung ab. Eine Zuordnungslogik, die der Zuordnungsanwendung zugrunde liegt, weist der Aufforderung zur Ausgabe eines Interaktionselements durch die Nutzeranwendung dann ein konkretes Bild-, Ton-, Haptik- oder Olfaktorikelement zu.

Vorzugsweise berücksichtigt die Zuordnungslogik bei der Zuordnung eines konkreten Interaktionselements die Art des dem Endgerät zugeordneten Eingabemittels oder des dem Endgerät zugeordneten Ausgabemittels automatisch. Weist das Endgerät beispielsweise einen berührungsempfindlichen Bildschirm auf, so eignet er sich sehr gut, Eingabeelemente als scheinbare Tasten auf dem berührungsempfindlichen Bildschirm optisch darzustellen. Das Eingabeelement sowie das Ausgabeelement ist jeweils ein optisches. Sollte als Eingabegerät lediglich ein Mikrofon und als Ausgabegerät lediglich ein Lautsprecher vorhanden sein, so bietet sich die Sprachausgabe als Aufforderung zur Eingabe eines Sprachbefehls ein. Das Ausgabeelement könnte dann beispielsweise erscheinen als folgende Tondatei: "Sagen Sie bitte jetzt OK, wenn Sie einverstanden sind." Das Eingabeelement wäre dann beispielsweise eine Spracherkennungsfunktion, die sensibel auf das Wort "OK" reagiert.

Die Interaktionsmittel können bekanntermaßen unterschiedliche Zustände aufweisen. So kann ein Button auf einem Bildschirm z.B. deaktiviert, aktiviert, betätigt, ausgewählt, in einer Art Überlegesituation oder vielem mehr dargestellt sein. Dabei handelt es sich aber stets um dasselbe Eingabeelement, welches aber in jeweils unterschiedlichen Zuständen dargestellt wird. Hinter jedem Zustand verbirgt sich allerdings eine eigene Aufbauinformation, die lokal im Endgerät vorgehalten wird und bei Bedarf bereitgestellt wird. So kann zum Beispiel die Erscheinungsform lokal durch die Zuordnungsanwendung auf dem Endgerät abgeändert werden, wenn sich der Zustand des Buttons aufgrund einer Betätigung ändern soll. Der Vorteil liegt dabei in einer deutlichen Verbesserung von Reaktionszeiten, da die Zustandsänderung lokal erfolgen kann und damit keine Datenübertragungszeit über das Internet zur zentralen Datenverarbeitungseinheit und zurück erforderlich ist.

Vorzugsweise wird die Zuordnungslogik automatisch angepasst, wenn sich Ausgabeparameter oder Eingabeparameter ändern. Unter solchen Parametern sind sämtliche Rahmenbedingungen bezüglich eines angeschlossenen Aus- oder Eingabegeräts gemeint. Wenn also beispielsweise ein Ausgabegerät durch ein anderes ersetzt wird, ändern sich zwangläufig auch die Ausgabeparameter. Sollte beispielsweise zur Interaktion der Bildschirm abgeschaltet und nur noch der Lautsprecher zur Verfügung stehen, so muss natürlich die Zuordnungslogik dahingehend geändert werden, dass auf Basis derselben Aufforderung durch die Nutzeranwendung nunmehr akustische anstelle von optischen Interaktionselementen ausgegeben werden. Die in der Cloud ablaufende Nutzeranwendung bleibt von solchen lokalen Änderungen am Endgerät unbeeinflusst.

Ferner kann auch der Nutzer die Zuordnungslogik, zumindest unbewusst, abändern, beispielsweise durch Eingabe von Präferenzen über seine bevorzugten Interaktionselemente. Insgesamt kann sich eine deutliche Erhöhung der Nutzerfreundlichkeit ergeben, ohne dass dabei die Nutzeranwendung auf der Cloud zu beeinflussen ist. Alles kann lokal erfolgen. Sollte allerdings der Nutzer seine Präferenzen im Rahmen einer Nutzereingabe auf einem Endgerät eingestellt haben, so ist es vorteilhaft, wenn diese Präferenzen auch auf andere Endgeräte übertragbar wären, die ebenfalls von dem selben Nutzer benutzt werden. Als Beispiel: Als Quittungston wird standardmäßig ein hoher schriller Ton verwendet. Der Nutzer kann diesen Quittungston in einen tiefen Ton ändern. Hierfür ist es vorzugsweise vorgesehen, dass Änderungsinformationen über nutzerbedingte Änderungen an der Zuordnungslogik auf ein anderes Gerät im Rahmen eines Geräteupdates übertragen werden. Dafür können diese Änderungsinformationen innerhalb der Cloud abgelegt werden. Der Vorteil liegt darin, dass dem Nutzer dennoch ein geräteübergreifendes einheitliches Bedienerlebnis ermöglicht wird. Der tiefe Quittungston wird dann auch auf dem anderen Gerät verwendet.

Die Erfindung wird anhand der Figuren näher erläutert, hierin zeigt
- Figur 1: schematisch dem Aufbau einer erfindungsgemäßen Datenverarbeitungsanordnung;
- Figur 2: a) ein Endgerät der Datenverarbeitungsanordnung nach Figur 1, b) ein auf dem Endgerät nach Figur 2a) dargestelltes Eingabeelement in unterschiedlichen Zuständen;
- Figur 3: ein Ablaufdiagramm zum Ausgeben von interaktionselementen nach dem erfindungsgemäßen Verfahren.

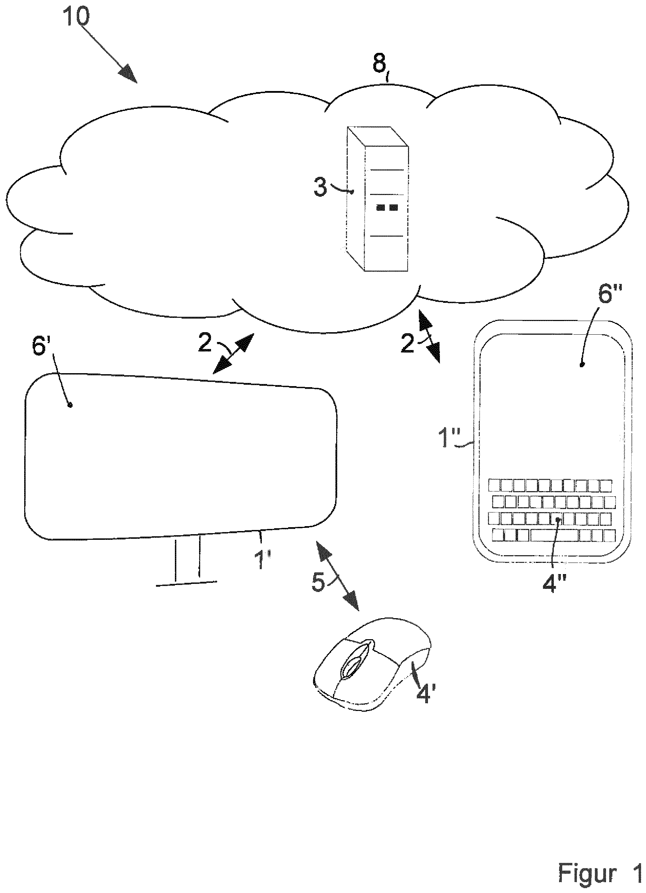

In Figur 1 ist der grundsätzliche Aufbau einer erfindungsgemäßen Datenverarbeitungsanordnung 10 gezeigt. Dabei sind mehrere elektronische und internetfähige Endgeräte vorgesehen, wie beispielsweise ein internetfähiger Fernseher 1' oder ein internetfähiges Mobiltelefon 1". Jedem der Endgeräte 1 ist zumindest ein Eingabemittel zugeordnet. So ist stellvertretend für weitere Eingabemittel eine Maus 4' dargestellt, die dem Fernseher 1' zugeordnet ist. Die Maus 4' kann über eine lokale Datenleitung, beispielsweise eine Funkverbindung 5 mit dem Fernseher 1' verbunden sein. Das Mobiltelefon 1" weist eine virtuelle Tastatur 4" als Eingabemittel auf, die auf dem berührungsempfindlichen Bildschirm 6" des Mobiltelefons 1" aufgebaut ist.

Über eine Internetverbindung 2 sind die Endgeräte 1 mit einer Rechnerwolke 8 verbunden. In der Rechnerwolke 8 ist zumindest eine zentrale Datenverarbeitungseinheit, insbesondere ein Server 3 vorgesehen, auf dem eine Nutzeranwendung abläuft. Das bedeutet: Die eigentliche Anwendungslogik, d.h. die Verknüpfung von logischen Funktionen innerhalb der Anwendung, laufen auf dem Server 3 ab. Der Server 3 sendet dann über das Internet 2 lediglich Ausgabeinformationen an die Endgeräte 1, wobei die Endgeräte 1 dann z.B. als Bildschirm dienen. Die wesentlichen inhaltlichen Operationen laufen nicht auf den Endgeräten 1 sondern auf dem Server 3 ab, mit Ausnahme von solchen Operationen, die für die konkrete Erscheinungsform von Interaktionselementen erforderlich sind.

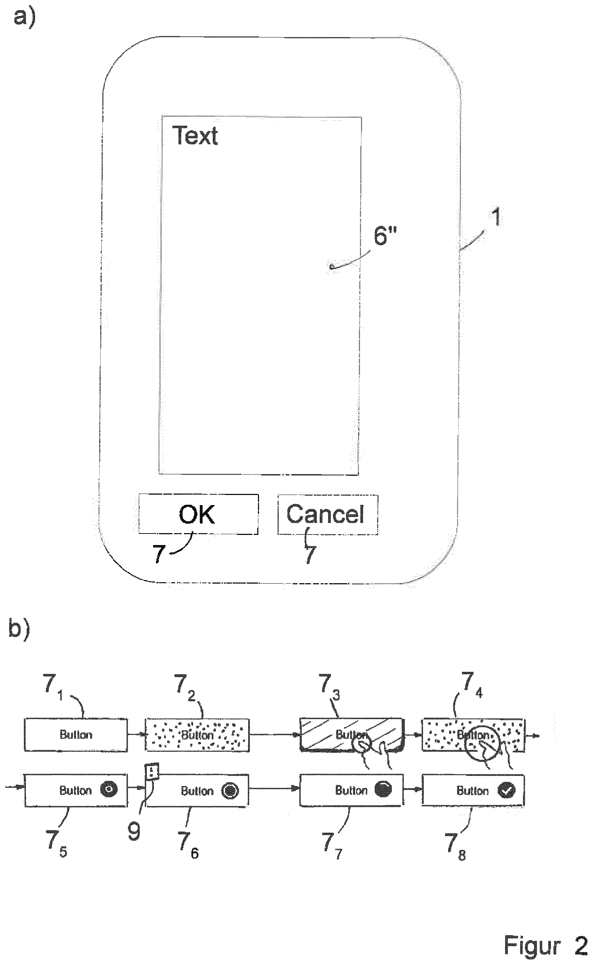

In Figur 2 ist beispielhaft der Bildschirm 6" des Mobiltelefons 1" gezeigt. Im unteren Bereich des Bildschirms sind zwei Bedienelemente in Form von Bildschirmtasten dargestellt. Dabei handelt es sich also um optische Eingabeelemente. Wie in Figur 2b zu erkennen ist, kann ein solches Eingabeelement unterschiedliche Zustände einnehmen. Hierzu ist in Figur 2b eine Ablaufreihenfolge möglicher unterschiedlicher Zustände der Bildschirmtaste 7 aufgezeigt. 7₁ zeigt die Bildschirmtaste in einem aktiven Zustand, der eine Verfügbarkeit der Taste signalisiert. Die Hintergrundfarbe kann z.B. weiß sein. In diesem aktiven Zustand ist eine Bedienung nicht per Mausdruck oder Fingerberührung möglich. Das Bedienelement 7₁ ist allerdings nicht ausgewählt, so dass durch das Drücken alleine der Returntaste die Bildschirmtaste 7 nicht betätigt wird. 7₂ zeigt die aktivierte und ausgewählte Bildschirmtaste. Eine Betätigung der Taste ist neben dem Mausklick oder Fingerdruck nun auch über einfaches Drücken der Returntaste möglich. Gegenüber der Bildschirmtaste 7₁ ist eine graphische Abgrenzung beispielsweise über einen stärkeren Rahmen oder durch eine dunklere Farbe, beispielsweise ein heller Grauton (durch Punkte angedeutet) gegeben.

7₃ zeigt die Bildschirmtaste in einem Zustand, wenn diese beispielsweise durch einen Mausklick und Fingerdruck scheinbar heruntergedrückt wird. Gegenüber der Bildschirmtaste im Zustand 7₂ oder 7₁ wird dies durch unterschiedlich dick gestaltete Ränder visualisiert, was eine Verschieben im Raum simulieren soll. Ferner umgrenzt ein kleiner Kreis den Bereich, in dem das Fingerzeigersymbol oder ein Mauszeiger die Bildschirmtaste berühren, wodurch dem Nutzer eine Rückmeldung gegeben wird, dass er die Taste jetzt gerade drückt. Es wird ein noch kräftiger Farbton als bei 7₂ verwendet, beispielsweise ein dunkler Grauton, symbolisiert durch die Schattierung. 7₄ zeigt die Bildschirmtaste, nachdem der Nutzer die Taste scheinbar losgelassen hat, also den Finger vom Touchpad entfernt oder die Maustaste loslässt. Es wird wieder auf den Farbton entsprechend 7₂ gewechselt. Die scheinbare Verschiebung im Raum verschwindet. Der Kreis um den scheinbaren Berührpunkt ist nun größer als in 7₃.

7₅ zeigt den Zustand, wenn die Nutzereingabe nun validiert wird. 7₆ zeigt einen Zustand, nachdem die Validierung abgeschlossen ist. Nun erfolgt die Ausführung des durch Eingabe ausgelösten Befehls, was durch die Darstellung 7₇ der Bildschirmtaste angezeigt wird. Die Beendigung der Ausführung wird durch die Bildschirmtaste 7₈ visualisiert. Die unterschiedlichen Zustände 7₅ bis 7₈ werden durch unterschiedliche kreisförmige Symbole auf den Bildschirmtasten visualisiert. Ferner können noch weitere optische Abgrenzungen, wie unterschiedliche Hintergrundfarben vorgesehen sein. Die Bildschirmtaste kann natürlich graphisch sehr komplex aufgebaut sein und insbesondere anstelle des Wortes "Button" irgend ein Bild (beispielsweise eine Fotographie in Form einer .jpg-Datei) sein.

In den Zuständen 7₁ und 7₂ wird dem Nutzer anhand des entsprechenden Interaktionselements 7 grundsätzlich etwas angeboten. In den Zuständen 7₃ und 7₄ wird dem Nutzer anhand des entsprechenden Interaktionselements 7 grundsätzlich mitgeteilt, dass das System eine Nutzereingabe empfängt. In den Zuständen 7₅ und 7₆ wird dem Nutzer anhand des entsprechenden Interaktionselements 7 grundsätzlich mitgeteilt, dass das System die Nutzereingabe verarbeitet. In den Zuständen 7₇ und 7₈ wird dem Nutzer anhand des entsprechenden Interaktionselements 7 grundsätzlich mitgeteilt, dass das System die mit der Nutzereingabe veranlasste Anweisung durchführt.

Neben den gezeigten Zuständen kann eine solche Bildschirmtaste auch noch weitere Zustände aufweisen, die mit den o.g. Zustände auch kombinierbar sind. So kann grundsätzlich zwischen einem aktiven Zustand einem nicht verfügbaren Zustand unterschieden werden. Ferner kann in jedem der gezeigten Zustand dem Bildschirmelement ein Symbol 9 zugeordnet werden, welches die Aufmerksamkeit des Nutzers auf sich lenken soll.

Die unterschiedlichen Zustände müssen sich natürlich nicht durch optisch Merkmale voneinander unterscheiden. Es könnte z.B. vorgesehen sein, dass bei jedem Wechsel von einem der Zustände in den nächsten Zustand ein jeweils anderes akustisches Signal ausgegeben wird.

Dass Bedienelemente solche unterschiedlichen Zustände annehmen können, ist zwar bereits bekannt. Bei den herkömmlichen derzeitigen Cloud-Anwendungen hingegen wird die Bildinformation vollständig von dem Server 3 auf die Endgeräte 1 übertragen. D.h. die Bedienelemente sind nichts anderes als ein kleiner Anteil einer gesamten Bildinformation, die stets über das Internet 2 vom Server 3 auf das Endgerät übertragen wird.

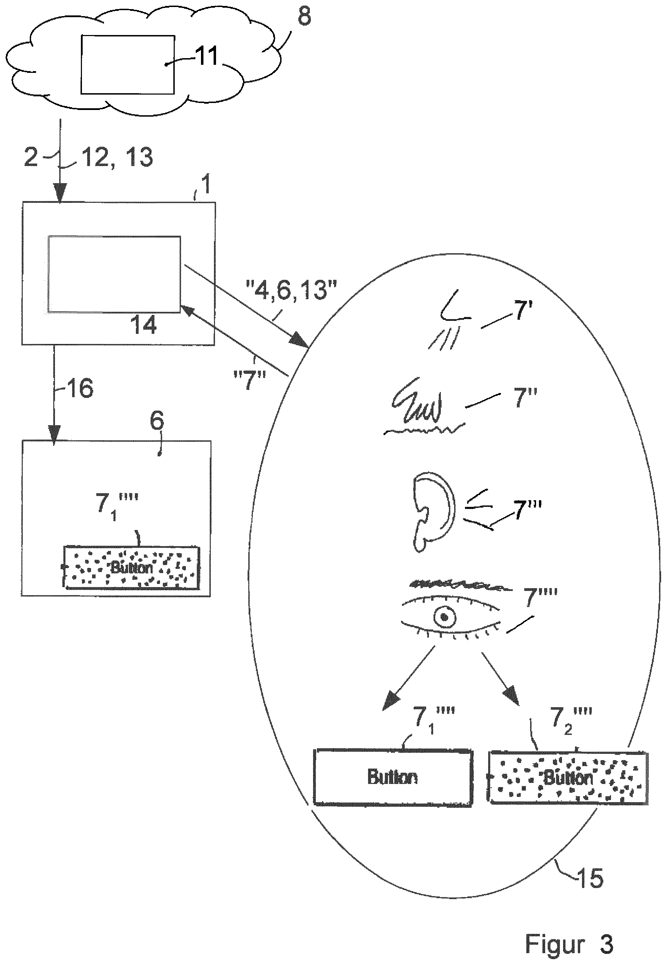

Die Erfindung geht nun einen anderen Weg, indem eine neue Aufteilung der Rechenleistung zwischen Server 3 und Endgerät 1 vorgenommen wird. Bei dieser neuen Aufteilung läuft zwar weiterhin die Anwendungslogik auf dem Server 3; das Erzeugen der Bildinformationen oder auch andere Informationen zum Erzeugen von Interaktionselementen, läuft getrennt davon auf dem Endgerät 1 ab. So wird von dem Server lediglich eine Aufforderung 12 (Figur 3) an das Endgerät über das Internet 2 ausgegeben, welches z.B. besagt: "Gebe ein aktiviertes aber nicht ausgewähltes Quittierelement zum Bestätigen eines Vorgangs aus." Nun wählt die Zuordnungsanwendung anhand der Zuordnungslogik die Bildschirmtaste 7₄ aus Figur 2b aus, wodurch die Eingabe des Tastendrucks bestätigt wird. Die Bildinformation, die zum Aufbauen dieser Bildschirmtaste erforderlich ist, also die Aufbauinformation, ist im Endgerät 1 gespeichert. Das bedeutet, dass die Bildinformation nicht über das Internet übertragen wird. Es ist ersichtlich, dass sich hierdurch enorme Einsparmöglichkeiten für Datenmengen, die über das Internet transportiert werden müssen, ergeben.

Die Aufforderung, die zum Erzeugen der Bildschirmtaste 7₂ aus Figur 2a ausreicht, kann von einem anderen Endgerät als Aufforderung verstanden werden, ein vollständig anderes Interaktionselement auszugeben. So kann im Wesentlichen die selbe Aufforderung zum Quittieren, anstelle durch das Ausgeben der Taste 7₂ auch durch eine Sprachausgabe erfolgen: "Bitte sagen Sie jetzt "OK". Die vom Server 3 ausgegebene Aufforderung für diese Sprachausgabe und die Aufforderung für die Ausgabe der Taste 7₂ sind vollkommen identisch. Das bedeutet also, dass der Server 3, abgesehen von der Zustandsvorgabe, keinen Einfluss darauf hat, wie seine Aufforderung zur Ausgabe eines Interaktionselements auf dem Endgerät 1 schließlich ausgeführt wird.

Hier ergeben sich dann natürlich eine Vielzahl von Möglichkeiten, wie ein Nutzer, oder auch ein Anbieter von Endgeräten, die Erscheinungsform einer auf einer Rechnerwolke ablaufenden Anwendung beeinflussen kann. So kann der Nutzer selbst festlegen, dass er Quittierungen bevorzugt per Spracheingabe anstelle mit Tastatureingaben tätigt. Hiervon bekommt die Nutzeranwendung, die auf dem Server abläuft, nichts mit. Ebenso kann durch den Anschluss neuer Eingabegeräte automatisiert die Zuordnungslogik automatisch angepasst werden.

In Figur 3 ist ein Ablaufschema zur Durchführung des erfindungsgemäßen Verfahrens dargestellt. In der Rechnerwolke 8 läuft auf dem dort angeordneten Server 3, die Nutzeranwendung ab. Die Nutzeranwendung sendet über das Internet 2 Ausgabeaufforderungen 12 an das Endgerät 1. Die Ausgabeaufforderung 12 umfassen dabei Zustandsidentifikationsangaben 13, anhand deren einem Interaktionselement, unterschiedliche Zustände vorgegeben werden. In dem Endgerät 1 läuft dann die Zuordnungsanwendung 14 ab, die auf die Zuordnungslogik 15 zugreift. Anhand des Zuordnungsalgorithmus 15 wird ein konkretes auszugebendes Eingabe- oder Ausgabeelement ausgewählt wird. Als Eingangsgrößen für die Zuordnungslogik dienen dabei Informationen, über die an das Endgerät angeschlossenen Eingabemittel 4 oder Ausgabemittel 6 sowie die Zustandidentifikationsangabe 13. Ferner können noch Nutzerpräferenzen als Eingangsgrößen dienen. Anhand dieser Eingangsgrößen wird nun ein konkretes Eingabeelement 7 ausgewählt, beispielsweise ein visuelles Eingabemittel 7"". Durch die Zustandsidentifikationsangabe kann beispielsweise festgelegt sein, dass das Element deaktiviert ist. Dann wird das Bildelement 7₁"" ausgewählt. Sollte die Zustandsidentifikationsangabe verlangen, dass ein aktives Element ausgegeben wird, dann kann beispielsweise das Bildelement 7₂"" ausgewählt werden. Informationen über das ausgewählte Interaktionselement 7 werden dann von der Zuordnungslogik 15 an die Zuordnungsanwendung 14 übergeben bzw. innerhalb der Zuordnungsanwendung generiert. Es erfolgt dann eine Ausgabeanweisung 16 an den Bildschirm 6 oder an entsprechende andere Ausgabegeräte. Am Bildschirm 6 wird dann ein Bildelement ausgeben, das die Bildschirmtaste 7₂"" darstellt.

### Bezugszeichenliste

- 1: Endgerät
- 2: Internetverbindung
- 3: Server
- 4: Eingabemittel
- 5: lokale Datenleitung
- 6: Bildschirm
- 7: Eingabeelement / Ausgabeelement
- 8: Rechnerwolke
- 9: Aufmerksamkeitsysmbol
- 10: Datenverarbeitungsanordnung
- 11: Nutzeranwendung
- 12: Ausgabeaufforderung
- 13: Zustandsidentifikationsangabe
- 14: Zuordnungsanwendung
- 15: Zuordnungslogik
- 16: Ausgabeanweisung

## Patentansprüche

1. Verfahren zum Ausgeben von Interaktionselementen (7), insbesondere in Erscheinungsform von Bild-, Ton-, Haptik- oder Olfaktorikelementen, auf einem internetfähigen elektronischen Endgerät (1), insbesondere einem Mobiltelefon oder einem internetfähigen TV-Gerät, für die Kommunikation zwischen einem Nutzer und einem elektronischen Endgerät (1),
wobei das Endgerät (1) mit einer Rechnerwolke (8) verbunden ist und eine Nutzeranwendung (11) auf einer zentralen Datenverarbeitungseinheit in der Rechnerwolke, insbesondere einem Server (3), abläuft,
wobei die zentrale Datenverarbeitungseinheit (3) über eine Datenfernverbindung (2) mit dem Endgerät (1) verbunden ist,
wobei auf dem Endgerät (1) eine Visualisierung der auf der zentralen Datenverarbeitungseinheit (3) ablaufenden Nutzeranwendung (11) ausgegeben wird,
wobei das Endgerät (1) nach Aufforderung (12) durch die auf der zentralen Datenverarbeitungseinheit (3) ablaufenden Nutzeranwendung (11) ein geeignetes Interaktionselement (7) ausgibt,
**dadurch gekennzeichnet,**
**dass** eine Aufbauinformation (16) des auszugebenden Interaktionselements auf einer lokalen Speichereinheit des elektronischen Endgerätes (1) hinterlegt ist,
**dass** die Aufforderung (12) der zentralen Datenverarbeitungseinheit (3) eine Zustandsidentifikationsangabe über den einzunehmenden Zustand aus einer Mehrzahl von vorgegebenen Zuständen enthält und
**dass** basierend auf der Aufforderung (12) durch die Nutzeranwendung (11) ein konkretes Interaktionselement (7) durch das Endgerät (1) ausgewählt wird und die Aufbauinformation für das auszugebende Interaktionselement (7) aus der lokalen Speichereinheit abgefragt und dass das Interaktionselement (7) durch ein dem Interaktionselement entsprechenden Ausgabegerät (6) ausgegeben wird.

2. Verfahren nach dem vorherigen Anspruch,
**dadurch gekennzeichnet,**
**dass** lokal auf dem Endgerät eine Zuordnungsanwendung abläuft, die anhand einer Zuordnungslogik der Aufforderung zur Ausgabe eines Interaktionselements durch die Nutzeranwendung ein konkretes Interaktionselement zuordnet.

3. Verfahren nach dem vorherigen Anspruch,
**dadurch gekennzeichnet,**
**dass** die Zuordnungslogik bei der Zuordnung eines Interaktionselements die Art des dem Endgerät zugehörigen Eingabe- oder Ausgabemittels automatisch berücksichtigt.

4. Verfahren nach dem einem der Ansprüche 2 oder 3,
**dadurch gekennzeichnet,**
**dass** die Zuordnungslogik anhand von Ausgabeparametern des Endgeräts automatisch abgeändert wird, wenn sich die Ausgabeparameter ändern.

5. Verfahren nach dem einem der Ansprüche 2 bis 4,
**dadurch gekennzeichnet,**
**dass** die Zuordnungslogik anhand einer Nutzereingabe abänderbar ist.

6. Verfahren nach dem vorherigen Anspruch,
**dadurch gekennzeichnet,**
**dass** die anhand einer Nutzereingabe geänderte Zuordnungslogik auf andere Endgeräte übertragen wird, die dem selben Nutzer zugeordnet sind.

7. Verfahren nach dem vorherigen Anspruch,
**dadurch gekennzeichnet,**
**dass** Informationen über die durch die Nutzereingabe geänderte Zuordnungslogik im Rahmen eines Geräteupdates auf ein anderes Endgerät übertragen werden.

8. Verfahren nach einem der vorherigen Ansprüche,
**dadurch gekennzeichnet,**
**dass** ein Interaktionselement einen definierten Zustand aus einer Mehrzahl von vorgegebenen Zuständen (7₁-7₈) einnehmen kann, wobei die auf dem Endgerät ablaufende Zuordnungsanwendung anhand der Zustandsidentifikationsangabe dem auszugebenden Interaktionselement den geforderten Zustand zuordnet.

9. Datenverarbeitungsanordnung, welches ein Verfahren nach einem der vorherigen Ansprüche ausführt.

## Claims

1. A method for outputting interaction elements (7), in particular in the form of image elements, sound elements, haptic elements or olfactory elements, on an internet-enabled electronic terminal (1), in particular a mobile telephone or an internet-enabled television, for communication between a user and an electronic terminal (1),
the terminal (1) being connected to a computer cloud (8), and a user application (11) running on a central data processing unit in the computer cloud, in particular on a server (3),
the central data processing unit (3) being connected to the terminal (1) via a remote data connection (2),
a visualisation of the user application (11) which is running on the central data processing unit (3) being output on the terminal (1),
the terminal (1) outputting a suitable interaction element (7) after a request (12) from the user application (11) which is running on the central data processing unit (3),
**characterised in that**
an item of setup information (16) of the interaction element to be output is stored on a local memory unit of the electronic terminal (1),
the request (12) of the central data processing unit (3) contains a status identification indication about the status to be assumed out of a plurality of predefined statuses, and
on the basis of the request (12) from the user application (11), a specific interaction element (7) is selected by the terminal (1) and the item of setup information for the interaction element (7) to be output is retrieved from the local memory unit, and that the interaction element (7) is output by an output device (6) corresponding to the interaction element.

2. The method according to the preceding claim,
**characterised in that**
an assignment application runs locally on the terminal, which assignment application uses assignment logic to assign a specific interaction element to the request from the user application to output an interaction element.

3. The method according to the preceding claim,
**characterised in that**
the assignment logic automatically takes into account the type of input means or output means associated with the terminal when assigning an interaction element.

4. The method according to one of Claims 2 or 3,
**characterised in that**
the assignment logic is automatically modified using output parameters of the terminal if the output parameters change.

5. The method according to any one of Claims 2 to 4,
**characterised in that**
the assignment logic can be modified by means of a user input.

6. The method according to the preceding claim,
**characterised in that**
the assignment logic changed by means of a user input is transmitted to other terminals assigned to the same user.

7. The method according to the preceding claim,
**characterised in that**
information on the assignment logic changed by means of the user input are transmitted to another terminal during a device update.

8. The method according to any one of the preceding claims,
**characterised in that**
an interaction element can assume a defined status out of a plurality of predefined statuses (7₁-7₈), wherein the assignment application running on the terminal uses the status identification indication to assign the requested status to the interaction element to be output.

9. A data processing arrangement which executes a method according to any one of the preceding claims.

## Revendications

1. Procédé pour l'émission d'éléments d'interaction (7), en particulier sous la forme d'éléments d'image, sonores, haptiques ou olfactifs, sur un terminal électronique (1) apte à être connecté à Internet, en particulier un téléphone portable ou un téléviseur apte à être connecté à Internet, pour la communication entre un utilisateur et un terminal électronique (1),
dans lequel le terminal (1) est relié à un nuage informatique (8) et une application d'utilisateur (11) est exécutée sur une unité de traitement de données centrale dans le nuage informatique, en particulier sur un serveur (3),
dans lequel l'unité de traitement de données centrale (3) est reliée au terminal (1) par le biais d'une liaison de données à distance (2),
dans lequel une visualisation de l'application d'utilisateur (11) exécutée sur l'unité de traitement de données centrale (3) est émise sur le terminal (1),
dans lequel le terminal (1) émet un élément d'interaction (7) approprié à la demande (12) de l'application d'utilisateur (11) exécutée sur l'unité de traitement de données centrale (3),
**caractérisé en ce que**
une information de structure (16) de l'élément d'interaction à émettre est enregistrée dans une mémoire locale du terminal électronique (1),
**en ce que** la demande (12) de l'unité de traitement de données centrale (3) contient une indication d'identification d'état concernant l'état à adopter parmi une pluralité d'états prédéfinis, et
**en ce que** sur la base de la demande (12) par l'application d'utilisateur (11), un élément d'interaction (7) concret est sélectionné par le terminal (1) et l'information de structure pour l'élément d'interaction (7) à émettre est extraite à partir de la mémoire locale, et **en ce que** l'élément d'interaction (7) est émis par un dispositif de sortie (6) correspondant à l'élément d'interaction.

2. Procédé selon la revendication précédente,
**caractérisé en ce que**
une application d'attribution attribuant un élément d'interaction concret à la demande pour l'émission de l'élément d'interaction par l'application d'utilisateur, à l'aide d'une logique d'attribution, est exécutée localement sur le terminal.

3. Procédé selon la revendication précédente,
**caractérisé en ce que** la logique d'attribution tient automatiquement compte du type de moyen d'entrée ou de sortie associé au terminal, lors de l'attribution d'un élément d'interaction.

4. Procédé selon l'une des revendications 2 ou 3,
**caractérisé en ce que**
la logique d'attribution est modifiée automatiquement à l'aide de paramètres de sortie du terminal lors de la modification des paramètres de sortie.

5. Procédé selon l'une des revendications 2 à 4,
**caractérisé en ce que**
la logique d'attribution peut être modifiée à l'aide d'une entrée d'utilisateur.

6. Procédé selon la revendication précédente,
**caractérisé en ce que**
la logique d'attribution modifiée à l'aide d'une entrée d'utilisateur est transmise à d'autres terminaux attribués au même utilisateur.

7. Procédé selon la revendication précédente,
**caractérisé en ce que**
des informations concernant la logique d'attribution modifiée par l'entrée d'utilisateur sont transmises à un autre terminal dans le cadre d'une mise à jour de dispositif.

8. Procédé selon l'une des revendications précédentes,
**caractérisé en ce que**
un élément d'interaction peut adopter un état défini parmi une pluralité d'états prédéfinis (7₁-7₈), sachant que l'application d'attribution exécutée sur le terminal attribue l'état requis à l'élément d'interaction à émettre, à l'aide de l'indication d'identification d'état.

9. Système de traitement de données exécutant un procédé selon l'une des revendications précédentes.
